(19) Europäisches Patentamt

European Patent Office

Office européen des brevets

(11) **EP 1 015 797 B1**

(12) **EUROPÄISCHE PATENTSCHRIFT**

(45) Veröffentlichungstag und Bekanntmachung des Hinweises auf die Patenterteilung:
**02.05.2002 Patentblatt 2002/18**

(51) Int Cl.⁷: **F16H 59/72**
// (F16H59/78, 59:64)

(21) Anmeldenummer: **98956832.4**

(22) Anmeldetag: **21.09.1998**

(86) Internationale Anmeldenummer:
**PCT/EP98/06015**

(87) Internationale Veröffentlichungsnummer:
**WO 99/15815 (01.04.1999 Gazette 1999/13)**

(54) **VERFAHREN ZUM STEUERN EINES AUTOMATGETRIEBES**

METHOD FOR CONTROLLING AN AUTOMATIC GEARBOX

PROCEDE DE COMMANDE D'UNE BOITE DE VITESSES AUTOMATIQUE

(84) Benannte Vertragsstaaten:
**DE FR GB IT**

(30) Priorität: **25.09.1997 DE 19742313**

(43) Veröffentlichungstag der Anmeldung:
**05.07.2000 Patentblatt 2000/27**

(73) Patentinhaber: **ZF FRIEDRICHSHAFEN Aktiengesellschaft**
**88038 Friedrichshafen (DE)**

(72) Erfinder:
• **HENNEKEN, Markus**
**D-88079 Kressbronn (DE)**
• **JAUCH, Friedemann**
**D-88074 Meckenbeuren (DE)**
• **HERBSTER, Kai-Uwe**
**D-88046 Friedrichshafen (DE)**
• **MAUZ, Thomas**
**D-88079 Kressbronn (DE)**
• **SCHULER, Franz-Josef**
**D-88079 Kressbronn (DE)**

(56) Entgegenhaltungen:
EP-A- 0 482 691   DE-A- 3 922 051
DE-A- 3 928 814   DE-A- 19 545 588
US-A- 4 928 235   US-A- 5 319 963

## Beschreibung

Die Erfindung betrifft ein Verfahren zum Steuern eines von einer Brennkraftmaschine angetriebenen Automatgetriebes, wobei eine elektronische Getriebesteuerung prüft, ob eine Kaltstart-Bedingung vorliegt.

Bei elektrohydraulischen Automatgetrieben ist üblicherweise in der Software der elektronischen Getriebesteuerung ein sogenanntes Warmlauf-Programm bzw. Warmlauf-Schaltkennfeld integriert. Bei aktiviertem Warmlauf-Programm sind die Schaltpunkte des Automatgetriebes zu höheren Drehzahlwerten der Brennkraftmaschine bzw. der Getriebeausgangsdrehzahl verschoben. Hierdurch wird erreicht, daß die Brennkraftmaschine und der Katalysator sich schneller erwärmen und somit schneller die ideale Betriebstemperatur erreichen. So schlägt z. B. die DE-OS 39 28 814 vor, daß mittels eines Temperatursensors eine Kaltstart-Bedingung des Kraftfahrzeugs erfaßt wird und die elektronische Getriebesteuerung für einen begrenzten Zeitraum die Gangstufen des Automatgetriebes über ein Warmlauf-Schaltprogramm schaltet. Des weiteren wird vorgeschlagen, daß es sich bei der durch den Sensor erfaßten Temperatur um die Kühlmitteltemperatur der Brennkraftmaschine bzw. um die Temperatur des ATF (Automatic Transmission Fluid) handelt.

In der US gattungsbildende 5,319,963 A ist ein mathematisches Verfahren bekanntgeworden, um die Getriebeöltemperatur vorauszuberechnen, so daß kein Getriebeöltemperatursensor erforderlich ist. Hierzu werden die Wärmeströme im Drehmomentwandler, im Getriebe, im Kühler und der Wärmestrom der Konvektion berechnet. Unter Berücksichtigung einer geschätzten, spezifischen Wärmekapazität des Komplettgetriebes ergibt sich eine Abschätzung der tatsächlichen Getriebeöltemperatur, anhand der ein "hot-mode" und ein "cold-mode" für die Schaltpunktsteuerung von Gangstufen und Wandlerüberbrückungskupplung steuerbar ist.

Die im zuvor beschriebenen Stand der Technik genannte Zeitstufe, wie lange das Warmlauf-Schaltprogramm aktiv ist, wird üblicherweise von den Pkw-Herstellern mittels Abgastest auf einem Rollenprüfstand ermittelt. Hieraus ergibt sich das Problem, daß sich der tatsächliche Straßenbetrieb vom Abgastest unterscheidet. Wird z. B. das Fahrzeug bereits nach kurzer Zeit stillgesetzt und erneut gestartet, so beginnt die Zeitstufe wieder in voller Länge zu laufen.

Die der Erfindung zugrunde liegende Aufgabe besteht insofern darin, ein am tatsächlichen Fahrbetrieb orientiertes Warmlauf-Programm zu entwickeln.

Eine erste Lösung der Aufgabe besteht erfindungsgemäß darin, daß die elektronische Getriebesteuerung bei Vorliegen der Kaltstart-Bedingung aus dem von der Brennkraftmaschine abgegebenen Moment und dessen Drehzahl die von der Brennkraftmaschine abgegebene Leistung bestimmt. Aus zwei innerhalb eines Zeitraums errechneten Leistungswerten wird sodann ein Energiedurchsatz bestimmt und zu dem bisherigen Energiedurchsatz summiert. Diesem summierten Energiedurchsatz wird sodann über eine Kennlinie eine erste Fahraktivität zugeordnet, wobei die erste Fahraktivität höhere Schaltpunkte des Automatgetriebes bewirkt. Danach wird von der elektronischen Getriebesteuerung die erste Fahraktivität mit einer zweiten Fahraktivität verglichen, wobei die zweite Fahraktivität aus dem aktuellen Verhalten des Fahrers bestimmt wird. Diese zweite Fahraktivität kann z. B. mittels eines Verfahrens, wie es aus der DE-PS 39 22 051 bekannt ist, bestimmt werden. Die erste erfindungsgemäße Lösung ist somit vorzugsweise bei Automatgetrieben verwendbar, die über ein sogenanntes "intelligentes Schaltprogamm" verfügen, d. h., die Auswahl eines Schaltpunktes wird in Abhängigkeit vom Verhalten des Fahrers getroffen.

In einer Ausgestaltung hierzu wird vorgeschlagen, daß die erste Fahraktivität die Schaltpunkte des Automatgetriebes bestimmt, wenn diese größer ist als die zweite Fahraktivität. In einer anderen Ausgestaltung wird vorgeschlagen, daß die zweite Fahraktivität die Schaltpunkte bestimmt, wenn die erste Fahraktivität kleiner oder gleich der zweiten Fahraktivität ist.

Die erfindungsgemäße Lösung und deren Ausgestaltungen bietet den Vorteil, daß über den Energiedurchsatz der Brennkraftmaschine deren tatsächlicher Zustand, also die Temperatur, eindeutig bestimmt werden kann. Über die Summierung und der daraus resultierenden ersten Fahraktivität wird bewirkt, daß die Schaltpunkte zu höheren Werten verschoben werden. Die Zuordnung mittels Kennlinie ist hierbei so ausgeführt, daß eine höhere Summe des Energiedurchsatzes eine niederere erste Fahraktivität bewirkt. Über die beiden Ausgestaltungen, d. h. in Abhängigkeit des Vergleichs von der ersten mit der zweiten Fahraktivität, bleibt das Warmlauf-Programm aktiviert bzw. wird deaktiviert.

Die zweite Lösung der Aufgabe besteht erfindungsgemäß darin, daß die elektronische Getriebesteuerung den aus der abaegebenen Leistung der Brennkraftmaschine berechneten Energiedurchsatz bestimmt und zu dem bisherigen Energiedurchsatz summiert. Danach wird der summierte Energiedurchsatz mit einem Grenzwert verglichen und das von einem Fahrer vorgegebene Schaltprogramm aktiviert, wenn der summierte Energiedurchsatz größer als der Grenzwert ist. Diese Lösung ist somit vorzugsweise bei Automatgetrieben verwendbar, bei denen ein Fahrer manuell ein Schaltprogramm, z. B. Economy, Sport oder Winter, auswählen kann.

In Ausgestaltung sowohl zur ersten als auch zweiten erfindungsgemäßen Lösung wird vorgeschlagen, daß die elektronische Getriebesteuerung bei Erkennen der Kaltstart-Bedingung zusätzlich prüft, ob ein Neustart des Fahrzeugs. vorliegt und in Ausgestaltung hierzu wird vorgeschlagen, daß beim Neustart in Abhängigkeit der Temperatur der Brennkraftmaschine über eine Kennlinie ein Anfangswert des summierten Durchsatzes definiert ist. Alternativ hierzu wird vorgeschlagen, anstatt der Temperatur der Brennkraftmaschine die vergangene Zeit seit dem Stillsetzen des Fahrzeugs zu verwenden. Über diese beiden Ausgestaltungen wird der Vorteil erzielt, daß der Situation Rechnung getragen wird, wenn das Fahrzeug nach einer kurzen Wegstrecke stillgesetzt und erneut gestartet wird. In diesem Fall beginnt die Summierung des Energiedurchsatzes nicht bei Null, sondern bei einem über eine Kennlinie definierten Anfangswert.

In einer Ausgestaltung hierzu wird vorgeschlagen, daß die Zeit seit dem Stillsetzen des Fahrzeugs zusätzlich'eine Funktion der Umgebungstemperatur darstellt. Hierdurch wird dem Umstand Rechnung getragen, daß sich in Abhängigkeit der Umgebungstemperatur das Abkühlverhalten der Brennkraftmaschine während des Stillstands entsprechend verändert.

In den Zeichnungen ist ein bevorzugtes Ausführungsbeispiel darstellt.
Es zeigen:

Fig. 1    ein System-Schaubild;
Fig. 2    einen Programm-Ablaufplan;
Fig. 3    Kennlinie E(START) = f(THETA);
Fig. 4    Kennlinie FA(WARM) = F(SUM(E)) und
Fig. 5    einen Programm-Ablaufplan.

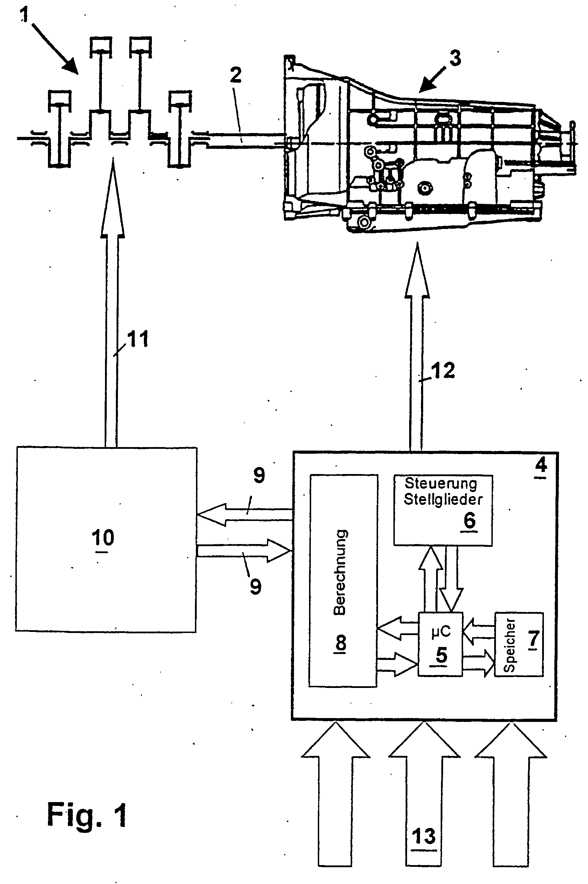

In Fig. 1 ist ein System-Schaubild einer Brennkraftmaschine/Automatgetriebe-Einheit dargestellt. Diese besteht aus der Brennkraftmaschine 1, dem Automatgetriebe 3, einer elektronischen Getriebesteuerung 4 und einem elektronischen Motorsteuergerät 10, welches über Steuerleitungen 11 die Brennkraftmaschine 1 steuert. Brennkraftmaschine 1 und Automatgetriebe 3 sind über eine Antriebswelle 2 mechanisch miteinander verbunden. Das elektronische Motorsteuergerät 10 und die elektronische Getriebesteuerung 4 sind über Datenleitungen 9 miteinander verbunden. Über diese Datenleitungen kommunizieren die beiden Steuergerät, z. B. mittels CAN-Bus. Auf diesen Datenleitungen stellt 2. B. das elektronische Motorsteuergerät 10 folgende Informationen bereit: Moment der Brennkraftmaschine MM, Drehzahl der Brennkraftmaschine nMOT, Temperatur der Kühlmittelflüssigkeit der Brennkraftmaschine usw. Die elektronische Getriebesteuerung 4 stellt als Informationen auf den Datenleitungen 9 z. B. den Beginn und das Ende eines Schaltübergangs, der sogenannte Motoreingriff, oder ein Soll-Motormoment zur Verfügung usw.

Die elektronische Getriebesteuerung 4 wählt in Abhängigkeit von Eingangsgrößen 13 eine entsprechende Fahrstufe bzw. ein Schaltprogramm aus. Über ein hydraulisches Steuergerät, welches integraler Bestandteil des Automatgetriebes 3 ist und in dem sich elektromagnetische Stellglieder befinden, aktiviert sodann die elektronische Getriebesteuerung 4 via Steuerleitung 12 eine entsprechende Kupplungs-/Brems-Kombination. Von der elektronischen Getriebesteuerung 4 sind in stark vereinfachter Form als Blöcke dargestellt: Micro-Controller 5, Speicher 7, Funktionsblock Steuerung Stellglieder 6 und Funktionsblock Berechnung 8. Im Speicher 7 sind die getriebereievanten Daten abgelegt. Getrieberelevante Daten sind z. B. Programme, Schaltkennlinien, Kennfelder und fahrzeugspezifische Kennwerte als auch Diagnosedaten. Üblicherweise ist der Speicher 7 als EPROM, EEPROM oder als gepufferter RAM ausgeführt. Im Funktionsblock Berechnung 8 werden die für den Betrieb des Automatgetriebes 4 relevanten Daten, z. B. das Druckniveau, berechnet. Der Funktionsblock Steuerung Stellglieder 6 dient der Ansteuerung der sich im hydraulischen Steuergerät befindlichen Stellglieder.

Die Eingangsgrößen 13 der elektronischen Getriebesteuerung 4 sind z. B. eine den Leistungswunsch des Fahrers repräsentierende Größe, wie Fahrpedal/Drosselklappenstellung oder manuell angeforderte Schaltungen, die Getriebeeingangs- und -ausgangsdrehzahl, die Temperatur des ATF (Automatic Transmission Fluid) usw.

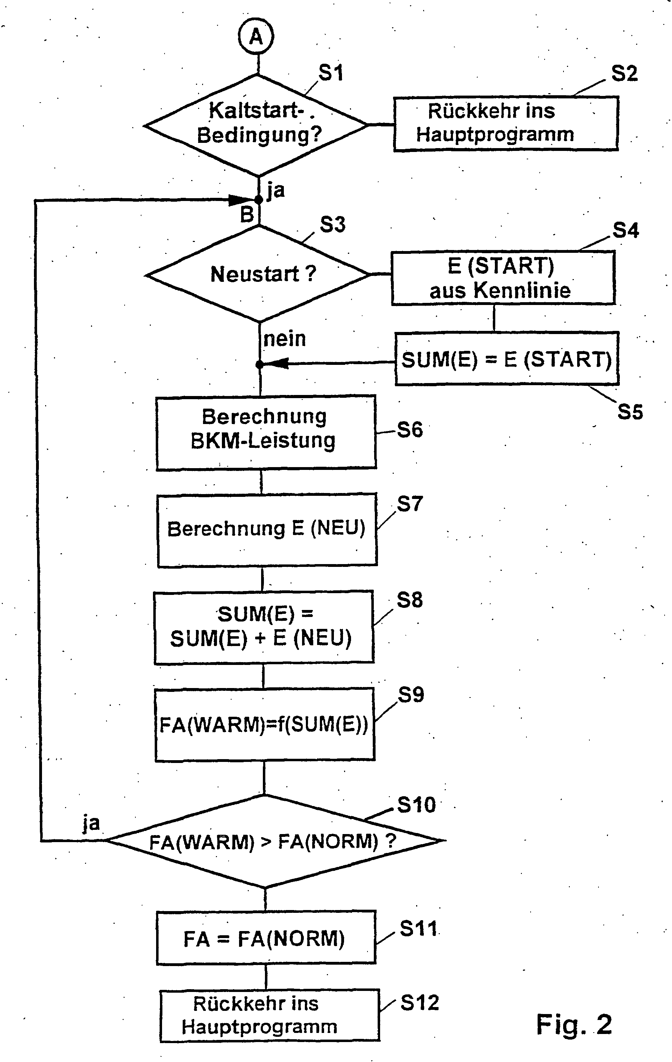

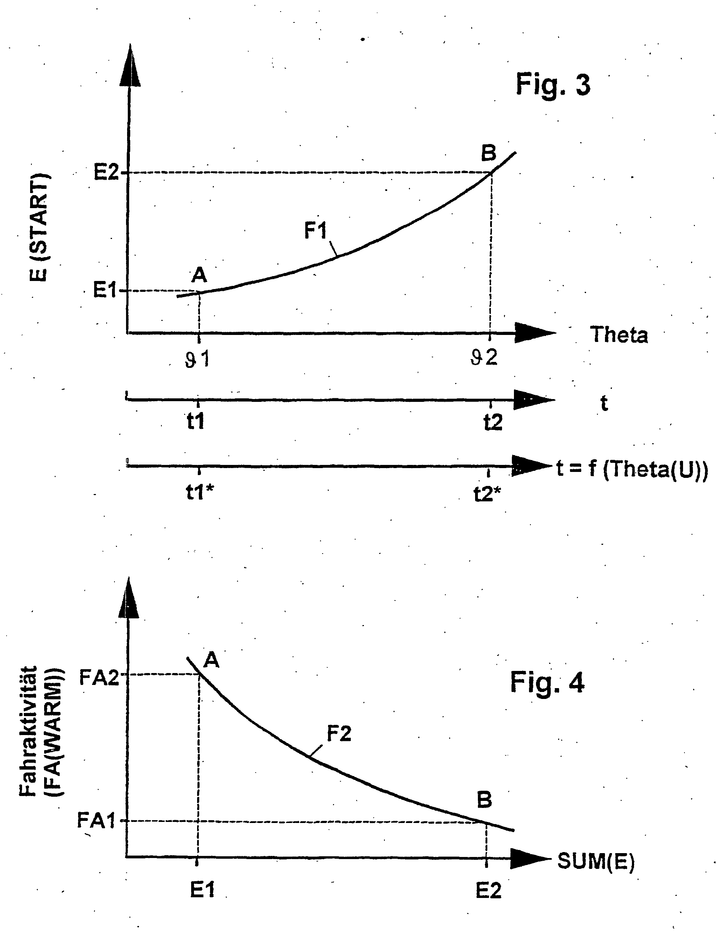

In Fig. 2 ist ein Programm-Ablaufplan dargestellt. Dieser Teil kann als ein Unterprogramm innerhalb der bestehenden Getriebesteuerungs-Software ausgeführt sein, beginnend bei Punkt A. Im Schritt S1 prüft die elektronische Getriebesteuerung 4, ob eine Kaltstart-Bedingung vorliegt. Die Kaltstart-Bedingung liegt dann vor, wenn die Kühlwassertemperatur der Brennkraftmaschine oder alternativ hierzu die Temperaur des ATF kleiner einem Grenzwert, z. B. 30 °C, sind. Liegt die Kaltstart-Bedingung nicht vor, d. h., die Brennkraftmaschine/Automatgetriebe haben Betriebstemperatur, so wird mit S2 ins Hauptprogramm zurückgekehrt. Bei positivem Abfrageergebnis in Schritt S1 wird im Schritt S3 geprüft, ob ein Neustärt vorliegt. Bei positivem Abfrageergebnis, das Fahrzeug wurde also neu gestartet, wird bei Schritt S4 über eine Kennlinie ein Anfangswert E(START) für den Energiedurchsatz/Summenspeicher ausgewählt. Diese Kennlinie ist in Fig. 3 dargestellt und wird in Verbindung damit erläutert. Bei Schritt S5 wird dieser Startwert E(START) dem Energiedurchsatz-Summenspeicher SUM(E) zugeordnet. Danach wird der Programm-Ablauf bei Schritt S6. weitergeführt. Bei negativem Abfrageergebnis im Schritt S3, d. h. das Fahrzeug ist in Betrieb, wird'der Programm-Ablauf bei Schritt S6 weitergeführt. Bei Schritt S6 wird die aktueile Leistung der Brennkraftmaschine zu einem ersten und zweiten Zeitpunkt gemäß der folgenden Beziehung berechnet:

$$P(i) = MM(i) \cdot nMOT(i) \cdot K$$

$$i = 1, 2, 3...n$$

Hierin bedeuten:

MM das aktuelle, von der Brennkraftmaschine abgegebene Moment,

nMOT der aktuelle Wert der Brennkraftmaschine und

K eine Umrechnungskonstante und i eine Zählvariable.

Bei Schritt S7 wird der Energiedurchsatz E (NEU) berechnet. Dies geschieht durch Addition von zwei Leistungswerten innerhalb einer Zeit, z. B. 100 ms. Es gilt folgende Beziehung:

$$E(NEU) = (P(i) + P(i+1)) \cdot dt$$

Hierin bedeuten:

P(i), P(i+1) die beiden Leistungswerte und
dt den Zeitraum.

Selbstverständlich kann der Energiedurchsatz E(NEU) auch durch Mittelwertbildung der beiden Leistungswerte P(i), P(i+1) berechnen werden.

Bei Schritt S8 wird sodann der berechnete Energiedurchsatz E(NEU) und der bisherige Inhalt des Energiedurchsatz-Summenspeichers SUM(E) miteinander addiert. Bei Schritt S9 wird sodann in Abhängigkeit des Inhalts des Energiedurch-Summenspeichers SUM (E) eine Fahraktivität FA(WARM) ausgewählt. Dies erfolgt mittels der in Fig. 4 dargestellten Kennlinie.

Bei Schritt S10 wird die erste Fahraktivität FA (WARM) mit einer zweiten Fahraktivität FA(NORM) verglichen. Diese zweite Fahraktivität wird hierbei aus dem aktuellen Verhalten des Fahrers bestimmt. Dies kann z. B. gemäß der in der DE-PS 39 22 051 vorgeschlagenen Art erfolgen. Wird bei Schritt S10 festgestellt, daß die erste Fahraktivität größer ist als die zweite Fahraktivität, so verzweigt das Programm zum Punkt B und beginnt erneut mit Schritt S3, nämlich der Abfrage, ob ein Neustart vorliegt. Ist die Abfrage beim Schritt S10 negativ, d. h. die erste Fahraktivität ist kleiner oder gleich der zweiten Fahraktivität, so verzweigt das Programm zum Schritt S11. Die Abfrage Schritt S10 ist dann negativ, wenn die Brennkraftmaschine einen entsprechend großen Energiedurchsatz hatte, so daß diese bzw. der Katalysator die Betriebstemperatur erreicht hat. Bei Schritt S11 wird dann die zweite Fahraktivität FA (NORM) als aktuell geltende Fahraktivität FA gesetzt. Hierdurch erfolgt sodann die Auswahl der Schaltpunkte ausschließlich in Abhängigkeit des Fahrerverhaltens. Bei Schritt S12 ist der Programm-Ablauf beendet und kehrt zum Hauptprogramm zurück.

In Fig. 3 ist eine Kennlinie F1 dargestellt. Als erste Abszisse Theta ist hierbei die Temperatur der Kühlmittelflüssigkeit der Brennkraftmaschine bzw. alternativ hierzu die Temperatur des ATF aufgetragen. Hierbei stellen die beiden Werte Theta 1 und Theta 2 einen Temperaturbereich von z. B. -20 bis +130 °C dar. Als Ordinate ist der Anfangswert eines Energiedurchsatzes E(START) aufgetragen. Über die Kennlinie F1 mit den beiden Begrenzungspunkten A und B wird somit dem Temperaturbereich Theta 1, Theta 2 ein entsprechender Bereich der Anfangswerte zugeordnet (E1, E2). Der Bereich der Anfangswerte des Energiedurchsatzes E (START) kann z. B. von 0 bis 2,5 kWh betragen. Der Maximalwert von E2 ist hierbei fahrzeugabhängig.

Ebenfalls in Fig. 3 dargestellt ist eine zweite Abszisse t, welche die Zeit darstellt. Diese Alternative kann anstatt der Temperatur Theta verwendet werden. Unter der Zeit t ist diejenige Zeit zu verstehen, die vergangen ist seit dem Stillsetzen des Fahrzeugs bis zum Neusrart. Der auf der Abszisse abgetragene Zeitraum t1/t2 entspricht z. B. dem Zeitraum von 5 min bis 8 h. Ebenfalls in Fig. 3 ist eine dritte Abszisse t mit dem Zeitraum t1*/t2* abgetragen. Dieser Zeitraum ist zusätzlich von der Umgebungstemperatur abhängig. Hierdurch wird dem Umstand Rechnung getragen, daß das Abkühlverhalten der Brennkraftmaschine im nichtbetriebenen Zustand von der Umgebungstemperatur abhängig ist.

In Fig. 4 ist eine Kennlinie F2 mit den Eckpunkten A und B dargestellt. Auf der Abszisse ist hierbei der Inhalt des Energiedurchsatz-Summenspeichers SUM (E) mit den beiden Eckpunkten E1 und E2 aufgetragen. Auf der Ordinate ist die erste Fahraktivität FA(WARM) mit den beiden Eckpunkten FA1 und FA2 aufgetragen. Dem Wert des Energiedurchsatz-Summenspeichers SUM(E) wird somit über die Kennlinie F2 eine erste Fahraktivität zugeordnet. Diese erste Fahraktivität kann z. B., wie in der DE-PS 39 22 051 aufgezeigt, Werte von 1, 2, 3, 4 und 5,. entsprechend dem Bereich FA1 bis FA2, annehmen. Selbstverständlich ist es auch möglich, den Bereich FA1/FA2 als einen Zähler, z. B. im Bereich 0 bis 255, darzustellen. Wie in Fig. 2 ausgeführt, wird sodann die erste Fahraktivität FA(WARM) mit der zweiten Fahraktivität FA(NORM) im Schritt S10 verglichen. In Abhängigkeit des Vergleichs wird entweder weiterhin der Schaltpunkt über die erste Fahraktivität oder über die zweite Fähraktivität bestimmt. Die zweite Fahraktivität FA(NORM) wird hierbei ausschließlich vom Verhalten des Fahrers festgelegt.

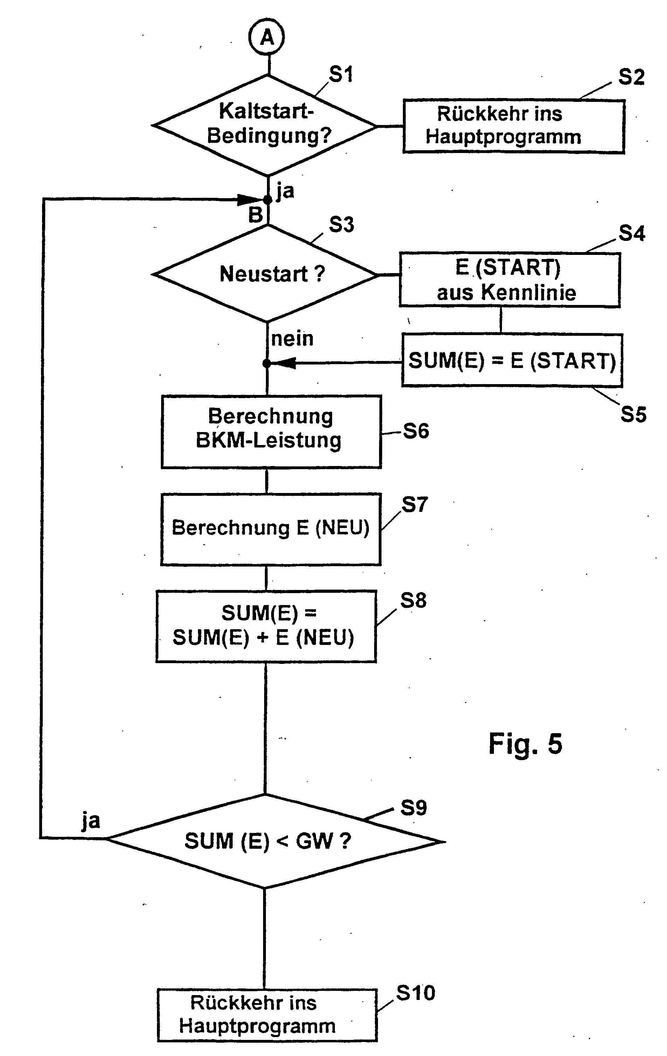

In Fig. 5 ist ein Programm-Ablaufplan der zweiten erfindungsgemäßen Lösung dargestellt. Diese Lösung kann immer dann verwendet werden, wenn in der Software der elektronischen Getriebesteuerung 4 kein sogenanntes intelligentes Schaltprogramm wie es z. B. in der DE-PS 39 22 051 beschrieben ist, enthalten ist. Mit anderen Worten: Diese erfindungsgemäße Lösung bietet sich immer dann an, wenn der Fahrer z. B. mittels eines Schalters ein Schaltprogramm auswählen kann (E/S/W). Der Programm-Ablaufplan der Fig. 5 ist bis zum Schritt S8 identisch mit dem Programm-Ablaufplan der Fig. 2, so daß das dort Beschriebene gilt. Bei Schritt S9 prüft die elektronische Getriebesteuerung, ob der Inhalt des Summen-Energiespeichers SUM(E) kleiner einem Grenzwert ist. Der Grenzwert kann z. B. 2, 5 kWh betragen. Dieser ist fahrzeugabhängig. Ergibt die Prüfung im Schritt S9, daß der Inhalt des Summen-Energiespeichers SUM(E) kleiner dem Grenzwert ist, so verzweigt der Programm-Ablaufplan zum Punkt B und fährt mit dem Schritt S3 fort mit der Abfrage, ob ein Neustart vorliegt. Ist die Abfrage negativ, d. h. die Brennkraftmaschine hat einen entsprechenden Energiedurchsatz überschritten, so wird bei Schritt S10 ins Hauptprogramm zurückgekehrt.

Bezugszeichen

1   Brennkraftmaschine
2   Antriebswelle
3   Automatgetriebe
4   elektronische Getriebesteuerung
5   Micro-Controller
6   Funktionsblock Steuerung Stellglieder
7   Speicher
8   Funktionsblock Berechnung
9   Datenleitung
10  elektronisches Motor-Steuergerät
11  Steuerleitung
12  Steuerleitung
13  Eingangsgrößen

**Patentansprüche**

1. Verfahren zum Steuern eines von einer Brennkraftmaschine (1) angetriebenen Automatgetriebes (3), wobei eine elektronische Getriebesteuerung (4) prüft, ob eine Kaltstart-Bedingung vorliegt, **dadurch gekennzeichnet, daß** die elektronische Getriebesteuerung (4) bei Vorliegen der Kaltstart-Bedingung.

   - aus dem von der Brennkraftmaschine (1) abgegebenen Moment (MM) und dessen Drehzahl (nMOT) die von der Brennkraftmaschine abgegebene Leistung (P) anhand der Formel

     $$[P(i) = MM(i) \cdot nMOT(i) \cdot K,$$

     $$i = 1, 2...n, k = Konstant]$$

     bestimmt;

   - aus zwei innerhalb eines Zeitraums (dt) errechneten Leistungswerten (P(i), P(i+1)) einen Energiedurchsatz (E(NEU)) anhand der Formel

     $$[E(NEU) = (P(i) + p(i+1)) \cdot dt]$$

     bestimmt und summiert (SUM(E));

   - über eine Kennlinie dem summierten Energiedurchsatz (SUM(E)) eine erste Fahraktivität (FA(WARM)) zuordnet [FA(WARM) = f(SUM (E)], wobei die erste Fahraktivität (FA(WARM)) höhere Schaltpunkte des Automatgetriebes (3) bewirkt und

   - die erste Fahraktivität (FA(WARM)) mit einer zweiten-Fahraktivität (FA(NORM)) vergleicht (S10), wobei die zweite Fahraktivität (FA (NORM)) aus dem aktuellen Verhalten des Fahrers bestimmt wird.

2. Verfahren nach Anspruch 1, **dadurch gekennzeichnet, daß** die Schaltpunkte des Automatgetriebes (3) über die erste Fahraktivität (FA(WARM)) bestimmt werden, wenn die erste Fahraktivität (FA (WARM)) größer ist als die zweite Fahraktivität (FA (NORM)).

3. Verfahren nach Anspruch 1, **dadurch gekennzeichnet, daß** die Schaltpunkte des Automatgetriebes (3) über die zweite Fahraktivität (FA(NORM) bestimmt werden, wenn die erste Fahraktivität (FA (WARM)) kleiner oder gleich der zweiten Fahraktivität (FA(NORM)) ist.

4. Verfahren nach dem Oberbegriff von Anspruch 1, **dadurch gekennzeichnet, daß** die elektronische Getriebesteuerung (4) bei Vorliegen der Kaltstart-Bedingung

   - aus dem von der Brennkraftmaschine (1) abgegebenen Moment (MM) und dessen Drehzahl (nMOT) die von der Brennkraftmaschine abgegebene Leistung (P) anhand der Formel

     $$[P(i) = MM(i) \cdot nMOT(i) \cdot K,$$

     $$i = 1, 2...n, k = Konstant],$$
     bestimmt;

   - aus zwei innerhalb eines Zeitraums (dt) errechneten Leistungswerten (P(i), P(i+1)) einen Energiedurchsatz (E(NEU)) anhand der Formel

     $$[E(NEU) = (P(i) + P(i+1)) \cdot dt]$$

     bestimmt und summiert (SUM(E));

   - den summierten Energiedurchsatz (SUM(E)) mit einem Grenzwert (GW) vergleicht und

   - das von einem Fahrer vorgegebene Schaltprogramm aktiviert, wenn der summierte Energiedurchsatz (SUM(E)) größer als der Grenzwert (GW) ist [SUM(E) > GW].

5. Verfahren nach einem der vorausgegangenen Ansprüche, **dadurch gekennzeichnet, daß** die elektronische Getriebesteuerung (3) bei Vorliegen der Kaltstart-Bedingung zusätzlich prüft, ob ein Neustart des Fahrzeuges vorliegt (S3).

6. Verfahren nach Anspruch 5, **dadurch gekennzeichnet, daß** beim Neustart in Abhängigkeit der Temperatur (THETA) der Brennkraftmaschine (1) über eine Kennlinie ein Anfangswert (E(START)) des summierten Energieduchsatzes (SUM(E)) definiert ist.

7. Verfahren nach Anspruch 5, **dadurch gekennzeichnet, daß** beim Neustart in Abhängigkeit der vergangenen Zeit (t) seit dem Stillsetzen des Fahrzeuges über eine Kennlinie ein Anfangswert (E(START)) des summierten Energieduchsatzes (SUM(E)) definiert ist.

8. Verfahren nach Anspruch 7, **dadurch gekennzeichnet, daß** die Zeit (t) zusätzlich eine Funktion der Umgebungstemperatur (THETA(U)) darstellt [t = f(THETA(U))].

**Claims**

1. Method for controlling an automatic gearbox (3) which is driven by an internal combustion engine (1), wherein an electronic gearbox control (4) checks whether a cold start condition exists, **characterised in that**, if the cold start condition exists, the electronic gearbox control (4) determines

 - the power (P) delivered by the internal combustion engine from the torque (MM) delivered by the internal combustion engine (1) and the speed (nMOT) thereof on the basis of the formula

$$[P(i) = MM(i) . nMOT(i) . K,$$

$$i = 1, 2...n, k = Konstant];$$

 - an energy throughput (E(NEU)) from two power values (P(i), P(i + 1)), calculated within a period (dt), on the basis of the formula

$$[E(NEU) = (P(i) + p(i + 1)) . dt]$$

and sums these (SUM(E));

 - associates a first driving activity (FA(WARM)) with the summed energy throughput (SUM(E)) via a characteristic [FA(WARM) = f(SUM(E))], wherein the first driving activity (FA(WARM)) effects higher shift points of the automatic gearbox (3), and

 - compares (S10) the first driving activity (FA(WARM)) with a second driving activity (FA(NORM)), wherein the second driving activity (FA(NORM)) is determined from the actual behaviour of the driver.

2. Method according to Claim 1, **characterised in that** the shift points of the automatic gearbox (3) are determined via the first driving activity (FA(WARM)) if the first driving activity (FA(WARM)) is greater than the second driving activity (FA(NORM)).

3. Method according to Claim 1, **characterised in that** the shift points of the automatic gearbox (3) are determined via the second driving activity (FA(NORM)) if the first driving activity (FA(WARM)) is less than or equal to the second driving activity (FA(NORM)).

4. Method according to the preamble of Claim 1, **characterised in that**, if the cold start condition exists, the electronic gearbox control (4) determines

 - the power (P) delivered by the internal combustion engine from the torque (MM) delivered by the internal combustion engine (1) and the speed (nMOT) thereof on the basis of the formula

$$[P(i) = MM(i) . nMOT(i) . K,$$

$$i = 1, 2...n, k = Konstant];$$

 - an energy throughput (E(NEU)) from two power values (P(i), P(i + 1)), calculated within a period (dt), on the basis of the formula

$$[E(NEU) = (P(i) + p(i + 1)) . dt]$$

and sums these (SUM(E));

 - compares the summed energy throughput (SUM(E)) with a limit value (GW), and

 - activates the shift program predetermined by a driver if the summed energy throughput (SUM(E)) is greater than the limit value (GW)

$$[SUM(E) > GW].$$

**5.** Method according to any one of the preceding Claims, **characterised in that**, if the cold start condition exists, the electronic gearbox control (4) additionally checks whether a restart (S3) of the vehicle exists.

**6.** Method according to Claim 5, **characterised in that** an initial value (E(START)) of the summed energy throughput (SUM(E)) is defined via a characteristic when restarting in accordance with the temperature (THETA) of the internal combustion engine (1).

**7.** Method according to Claim 5, **characterised in that** an initial value (E(START)) of the summed energy throughput (SUM(E)) is defined via a characteristic when restarting in accordance with the lapsed time (t) since stopping the vehicle.

**8.** Method according to Claim 7, **characterised in that** the time (t) additionally represents a function of the ambient temperature (THETA(U)).


**Revendications**

**1.** Procédé pour commander une transmission automatique (3) entraînée par un moteur à combustion interne (1), dans lequel une commande de transmission électronique (4) vérifie si l'on est en présence d'une condition de démarrage à froid, **caractérisé en ce qu'**en présence de la condition de démarrage à froid, la commande électronique (4) de la transmission

- détermine la puissance (P) développée par le moteur à combustion interne sur la base du couple (MM) développé par le moteur à combustion interne (1) et de sa vitesse de rotation (nMOT), en appliquant la formule

$$[P(i) = MM(i) . nMOT(i) . K,$$

$$i = 1 , 2...n, k = \text{constante}];$$

- détermine un débit d'énergie (E(NEU)) sur la base de deux valeurs de puissance (P(i), P(i+1)) qui sont calculées dans un espace de temps (dt), en appliquant la formule

$$[E(NEU) = (P(i) + P(i+1)) . dt]$$

et fait la somme (SUM(E)) ;

- fait correspondre une première activité de conduite (FA(WARM)) au débit d'énergie accumulé (SUM(E)) au moyen d'une caractéristique, [FA(WARM) = f(SUM(E))], la première activité de conduite (FA(WARM)) déterminant des points de commutation plus élevés de la transmission automatique (3) et

- compare (S10) la première activité de conduite (FA(WARM)) à une deuxième activité de conduite (FA(NORM)), la deuxième activité de conduite (FA(NORM)) étant déterminée sur la base du comportement actuel du conducteur.

**2.** Procédé selon la revendication 1, **caractérisé en ce que** les points de commutation de la transmission automatique (3) sont déterminés au moyen de la première activité de conduite (FA(WARM)) lorsque la première activité de conduite (FA(WARM)) est plus grande que la deuxième activité de conduite (FA(NORM)).

**3.** Procédé selon la revendication 1, **caractérisé en ce que** les points de commutation de la transmission automatique (3) sont déterminés d'après la deuxième activité de conduite (FA(NORM)) lorsque la première activité de conduite (FA(WARM)) est inférieure ou égale à la deuxième activité de conduite (FA(NORM)).

**4.** Procédé selon le préambule de la revendication 1, **caractérisé en ce qu'**en présence de la condition de démarrage à froid, la commande électronique (4) de la transmission

- détermine la puissance (P) développée par le moteur à combustion interne sur la base du couple (MM) développé par le moteur à combustion interne (1) et de sa vitesse de rotation (nMOT), en appliquant la formule

$$[P(i) = MM(i) . nMOT(i) . K,$$

$$i = 1, 2...n, k = \text{constante}];$$

- détermine un débit d'énergie (E(NEU)) sur la base de deux valeurs de puissance (P(i), P(i+1)) qui sont calculées dans un espace de temps (dt), en appliquant la formule

$$[E(NEU) = (P(i) + P(i+1)) . dt]$$

et fait la somme (SUM(E)) ;

- compare le débit d'énergie cumulé (SUM(E)) à une valeur limite (GW) et

- active le programme de commutation prédéterminé par un conducteur lorsque le débit d'énergie cumulé (SUM(E)) est supérieur à la valeur limite (GW), [SUM(E) > GW].

5. Procédé selon l'une des revendications précédentes, **caractéri**- s é en ce qu'en présence de la condition de démarrage à froid, la commande électronique (3) de la transmission vérifie en outre si l'on est en présence d'un nouveau démarrage du véhicule (S3).

6. Procédé selon la revendication 5, **caractérisé en ce que**, lors du nouveau démarrage, une valeur initiale (E(START)) du débit d'énergie cumulé (SUM(E)) est défini en fonction de la température (THETA) du moteur à combustion interne (1) au moyen d'une caractéristique.

7. Procédé selon la revendication 5, **caractérisé en ce que**, lors du nouveau démarrage, une valeur initiale (E(START)) du débit d'énergie cumulé (SUM(E)) est défini en fonction du temps (t) écoulé depuis l'arrêt du véhicule au moyen d'une caractéristique.

8. Procédé selon la revendication 7, **caractérisé en ce que** le temps (t) représente en outre une fonction de la température de l'environnement (THETA(U)), [t = f (THETA(U))].

1

3

2

11

12

10

9

9

**4**

Steuerung
Stellglieder
**6**

Berechnung

**8**

µC
**5**

Speicher **7**

13

# Fig. 1

Fig. 2

Fig. 3

Fig. 4

(A)

S1

Kaltstart-
Bedingung?

S2

Rückkehr ins
Hauptprogramm

ja

B

S3

Neustart ?

S4

E (START)
aus Kennlinie

nein

SUM(E) = E (START)

S5

Berechnung
BKM-Leistung

S6

Berechnung E (NEU)

S7

SUM(E) =
SUM(E) + E (NEU)

S8

Fig. 5

ja

SUM (E) < GW ?

S9

Rückkehr ins
Hauptprogramm

S10